# EUROPÄISCHE PATENTANMELDUNG

(11) **EP 0 704 408 A1**
(43) Veröffentlichungstag der Anmeldung: **03.04.1996**
(21) Anmeldenummer: 95115466.5
(22) Anmeldetag: 29.09.1995
(51) Int. Cl.: C01G 29/00, C01B 13/32

(54) **Verfahren und Vorrichtungen zur Herstellung von Bismutoxid und Bismutlegierungsoxiden**

(30) Priorität: 30.09.1994 DE 4435071
(71) Anmelder: Colour Ltd., Hamilton HM11 (BM)
(72) Erfinder: Heubach, Rainer, Dipl.-Kfm, A-5084 Grossgmain (AT)
(74) Vertreter: Müller-Boré & Partner Patentanwälte

(57) **Zusammenfassung**

Die Erfindung betrifft ein Verfahren zur Herstellung von technischem Bismutoxid oder Bismutlegierungsoxiden mit einem Bi₂O₃-Gehalt von über 99,5 Gew.% bei reinem Bi₂O₃ und über 90 Gew. % bei Bismutlegierungsoxiden, jeweils bezogen auf eingesetztes Bismut, durch Oxidation von Bismut oder Bismutlegierungen in Rührwerksreaktoren, bei dem flüssiges Bismut oder eine flüssige Bismutlegierung kontinuierlich einem Reaktor zudosiert und in diesem unter Zufuhr von Luft gerührt und das entstandene Produkt abgezogen wird, wobei die Zudosierung des flüssigen Bismuts oder der Bismutlegierung konstant gehalten wird, wobei das Bismut oder die Bismutlegierung mit einer Temperatur T_{Bi} direkt in den Reaktor eingedüst wird, die zwischen der metallischen Schmelz- und der Reaktionstemperatur liegt, und der Luftstrom zur Einhaltung einer geeigneten Reaktionstemperatur bei einer Schwankung von nicht mehr als ± 5°C minimal verändert wird, wobei die Reaktionstemperatur dauernd und an jeder Stelle im Reaktor unter dem Schmelzpunkt des Oxids oder dem Eutektikum der Legierungsoxide liegt. Die Erfindung betrifft weiterhin technisches Bismutoxid oder Bismutlegierungsoxide, herstellbar nach dem vorgenannten Verfahren sowie Vorrichtungen zur Durchführung des vorgenannten Verfahrens.

## Beschreibung

Die Erfindung betrifft den in den Patentansprüchen angegebenen Gegenstand. Die vorliegende Erfindung betrifft insbesondere Verfahren und Vorrichtungen zur Oxidation von Bismut und Bismut-Legierungen in Rührwerksreaktoren. Die Erfindung betrifft somit Direktverfahren, d.h. einstufige Verfahren und Vorrichtungen zur Herstellung von Bismut-angereicherten Metalloxiden mit einem Oxidationsgrad aller enthaltenen Metalle von größer als 90 Gew. % sowie zur Herstellung von hochreinem Bismutoxid, d.h. einem Bismutoxid mit einem hohen Gehalt an Dibismuttrioxid (Bi₂O₃).

Dibismuttrioxid, Bi₂O₃, im folgenden Bismuttrioxid genannt, wird durch Oxidation von Bismutmetall bei 750 bis 800°C, durch thermische Zersetzung von Bi-Carbonaten oder durch Zugabe von Alkalihydroxiden zu einer Bismutsalzlösung hergestellt. Im letzteren Fall fällt hydratisiertes Bismuttrioxid. Diese gelatinöse Verbindung wird gewöhnlich durch die Formel Bi(OH)₃ dargestellt. Durch Kalzinieren ergibt sich Bi₂O₃.

Bismuttrioxid ist in starken anorganischen Säuren und konzentrierten Alkalischen Lösungen, die Glycerin enthalten, löslich. Oberhalb 710 °C greift es Metalloxide an. Das geschmolzene Bismuttrioxid löst jedes Metalloxid und korriodiert selbst Platin. Der Schmelzpunkt liegt bei 824 °C. Die Dichte beträgt 9,32 g/cm³.

Hochreines Bismuttrioxid findet als Rohstoff vor allem Anwendung für
- Keramik, insbesondere Hochleistungskeramik für mechanische Zwecke;
- Hochtemperatursupraleiter (HT-Supraleiter);
- Dielektrika für Kondensatoren mit speziellen Anforderungen;
- Glas, insbesondere stark lichtbrechende Gebrauchsgläser;
- Optische Gläser;
- Pigmente (z.B. Bismut-Vanadat-Pigmente) im Buntfarben-, Speichermedien und Strahlenschutzbereich.

Bismuthaltige Mischoxide, insbesondere Bismut-angereicherte Mischoxide, finden u.a. Verwendung als Restersatzstoff in Bleigläsern und in Keramiken und Emaillen. Weiterhin eignen sie sich hervorragend als Ausgangsstoffe zur Darstellung verschiedenster Bismut- und anderer Metallverbindungen der in der Legierung vorhandenen Metalle.

Da in der letzten Zeit Bismuttrioxid verstärkt als Ersatz für Bleioxid in Glas, Keramik, Pigmenten und in HT-Supraleitern Anwendung findet, steigt der Bedarf an Bismutoxid, insbesondere an hochreinem Bismutoxid (d.h. Bismutoxid mit einem hohen Gehalt an Bismuttrioxid), das nach dem derzeitigen Verfahren aus Metall nur schwierig und nach langwierigen naßchemischen und umweltproblematischen Prozessen herstellbar ist.

Aus der AT 205463 ist ein Verfahren zur Herstellung von Metalloxiden, d.h. von Bleioxid bekannt, wobei ein Strom fein zerstäubten flüssigen Metalls auf einen Strom oxidierender Gase auftrifft. Dem Fachmann ist aus der Praxis bekannt, daß mit dem hier beschriebenen Prozeß ein Metall mit deutlich edleren Eigenschaften als Blei nicht zu einem Oxid der Reinheit von über 99,5% hergestellt werden kann. Mit der in der AT 205463 beschriebenen Anlage ist es aufgrund ihrer Bauweise nicht möglich, in technischem Maßstab Bismutoxide noch rein oder legiert zu erzeugen, da das entstehende Gemisch aus Bismut und anderen Metalloxiden, wie z.B. Bleioxid, infolge Aufschmelzen des Eutektikums die Anlage verklumpen und damit blockieren würde. Weiterhin ist eine genaue Einstellung der thermischen Parameter in einem "atomisizer" oder ähnlichen Anlagen nicht möglich, da das Reaktionsmedium während des Prozesses mit einem Wärmereservoir ausreichender Kapazität in Verbindung steht, was bei ähnlich gearbeiteten Sprühtrocknern zu Problemen führen kann, wenn außergewöhnliche Lösungswärme oder Reaktionsenthalpien berücksichtigt werden müssen. Dies führt dazu, daß eine einheitlich mit einem eindeutigen Ergebnis ablaufende Reaktion mit einer Anlage gemäß AT 205463 nur mit unedlen Metallen möglich ist. Die besagte Anlage ist weiterhin nicht in der Lage, Bismutoxide rein oder legiert zu erzeugen, weil dieses Material sofort mit oxidischen, feuerfesten Materialien der Wandungen auflösend in Wechselwirkung treten würde. Dies ist eine dem Bismutoxid innewohnende Eigenart, das die Verwendung dieses Metalls unter den in der AT 205463 angegebenen Bedingungen ausschließt.

In DE 3016984 A1 und DE 3829534 A1 werden Verfahren und Vorrichtungen zur Herstellung von Bleioxid mit hohem Oxidationsgrad aus fein zerteiltem, flüssigen Blei und Luft aus oxidierendem Gas beschrieben. Diese Verfahren lassen sich jedoch nicht auf die Herstellung von Bismutoxid bzw. Bismutlegierungsoxiden wegen der speziellen Eigenschaften des Bismuts in seinen Mischoxiden übertragen. Insbesondere ist dies wegen der besonderen Eigenschaften des Bismuts in seinen Mischoxiden, insbesondere
mit Blei niedrig schmelzende Eutektika zu bilden und damit zu klumpen,
eine geringe Oberflächenspannung in geschmolzenem Zustand als Blei zu besitzen und daher häufigere Angriffsmöglichkeiten für oxidierende Stoffe zu bieten (Bi: 392 mN/m bei 280°C und 384 mN/m bei 340°C in Luft, 378 mN/m am Schmelzpunkt unter Argon; Pb: 450 ± 20 mN/m am Schmelzpunkt unter Argon, 452 mN/m bei 360°C, 428 mN/m bei 700°C unter Vakuum. Bei einem Vergleich der Bildungsenthalpien der Oxide

| | | |
|---|---|---|
| für Bi₂O₃ | H = -137,16 kcal/465,96g bzw. | G = -118,0 kcal/465,96g |
| | | (-253,2 kcal/kg Prod.) |
| | | (-282,3 kcal/kg Edukt) |
| und PBO (gelb) | H = -51,47 kcal/223,19g bzw. | G = -44,9 kcal/223,19g |
| | | (-201,2 kcal/kg Prod.) |
| | | (-216,7 kcal/kg Edukt) |

Daher war eine inhomogene Reaktionsführung bei den Gemischen/Legierungen zu erwarten und eine höhere Wärmeausbeute und leichteres Anspringen der Reaktion bei reinem Bismut zu erwarten, was sich wegen der Entropieverminderung und eventuell hoher Aktivierungsenthalpie bei Bismut und der Passivierung nur oberflächlich oxidierter Bismut-Tröpfchen in der Realität als falsch und damit in den "klassichen" Verfahren gemäß DE 3016984 und DE 3829534 als hinderlich erwies;
im wäßrigen Milieu betragen die Normalpotentiale für alkalisches Auflösen von Bismut -0,46 V, das normale Bi⁰/Bi³⁺-Potential + ,31 V; für Blei beträgt das Pb⁰/Pb²⁺-Potential fast einheitlich -0,12 V, dies weist schon auf die hohe AB-hängigkeit der Redoxeigenschaften des Bismuts von den äußeren Bedingungen hin (Bleipot. im Akku etwa -0,4 V; völlig anderes System);
die Längendehnung um 3,32% beim Erstarren stellt hohe Anforderungen an die Reaktorbauweise (konische Bauform der Gefäße);
mit dem Schmelzpunkt von 271°C weist Bismut erst bei 1021°C einen Dampfdruck von 1 Torr auf und siedet bei 1564°C, während Blei mit einem Schmelzpunkt von 327°C schon bei 973°C 1 Torr erreicht, aber erst bei 1740°C siedet.

Aufgabe der Erfindung ist es daher, Bismut-haltige, inbesondere Bismut-angereicherte Metalloxide auf einfache und kostengünstige Weise in einem Direktverfahren, d.h. in einem einstufigen Verfahren herzustellen, wobei der Oxidationsgrad aller enthaltenen Metalle größer als 90 Gew. % beträgt.

Eine weitere Aufgabe der Erfindung ist die Herstellung eines Bismutoxids mit einem Gehalt an Bi₂O₃ von mehr als 99,95 Gew.% in einem Direktverfahren.

Diese Aufgabe wird durch das Verfahren nach Anspruch 1, das technische Bismutoxid oder Bismutlegierungsoxide gemäß Anspruch 10 sowie durch die Vorrichtung nach Anspruch 11 gelöst.

In den Unteransprüchen sind vorteilhafte Ausführungsformen der Erfindung enthalten.

Die Erfindung betrifft daher Verfahren zur Herstellung von technischem Bismutoxid oder Bismutlegierungsoxiden mit einem Bi₂O₃-Gehalt von über 99,5 Gew.% bei reinem Bi₂O₃ und über 90 Gew. % bei Bismutlegierungsoxiden, jeweils bezogen auf eingesetztes Bismut, durch Oxidation von Bismut oder Bismutlegierungen in Rührwerksreaktoren, bei dem flüssiges Bismut oder eine flüssige Bismutlegierung kontinuierlich einem Reaktor zudosiert und in diesem unter Zufuhr von Luft gerührt und das entstandene Produkt abgezogen wird, wobei die Zudosierung des flüssigen Bismuts oder der Bismutlegierung konstant gehalten wird, wobei das Bismut oder die Bismutlegierung mit einer Temperatur T_{Bi} direkt in den Reaktor eingedüst wird, die zwischen der metallischen Schmelz- und der Reaktionstemperatur liegt, und der Luftstrom zur Einhaltung einer geeigneten Reaktionstemperatur bei einer Schwankung von nicht mehr als ± 5°C minimal verändert wird, wobei die Reaktionstemperatur dauernd und an jeder Stelle im Reaktor unter dem Schmelzpunkt des Oxids oder dem Eutektikum der Legierungsoxide liegt.

Zur Herstellung von hochreinem Bismutoxid werden erfindungsgemäß Reaktionstemperaturen im Bereich von 450 bis 700°C, insbesondere von 620 bis 700°C ausgewählt. Zur Herstellung von Bismutlegierungsoxiden wählt man dahingegen Reaktionstemperaturen im Bereich von 480 bis 500°C, insbesondere von 480 bis 500°C aus.

Als Reaktoren für die Herstellung von Bismut-angereichten Metalloxiden bzw. hochreinem Bismutoxid werden erfindungsgemäß Rührwerksreaktoren verwendet, vorzugsweise handelt es sich um sogenannte Barton-Reaktoren und Doppelreaktoren, z.B. "Heubach-Doppelreaktoren".

Zur Herstellung von Bismut-angereicherten Metalloxiden können erfindungsgemäß Bismutlegierungen verwendet werden, insbesondere Bismut-Blei- oder Bismut-Blei-Zinn-Legierungen, deren Bismutanteil zwischen 2 und 50 Gew. %, bevorzugt zwischen 3 und 30 Gew. % beträgt, besonders bevorzugt zwischen 5 bis 20 Gew.%, und am meisten bevorzugt etwa 15 Gew.%. Bismut-Blei-Legierungen sind besonders bevorzugt. Sie fallen z.B. in verschiedenen Bleihütten bei der Abtrennung des Bismuts nach dem "Kroll-Betterton-Prozeß" an und können daher als preisgünstiges Ausgangsmaterial vorteilhaft verwendet werden.

Vorzugsweise beträgt die Reaktionstemperatur das mindestens 1,8- bis 2,6-fache des Schmelzpunktes der eingesetzten Legierung in °C, mindestens jedoch das Doppelte des eutektischen und das 1,5-fache des peritektischen Schmelzpunktes in °C, sofern hierdurch nicht das unbedingt zu vermeidende Aufschmelzen des Oxids oder Oxidgemisches bewirkt würde.

Am meisten bevorzugt beträgt die Temperatur bei der Oxidationsreaktion der Bismut-Bei-Legierung zwischen 480 und 580°C, da bei höheren Temperaturen eine Klumpenbildung durch Bildung des eutektischen Gemisches der Oxide einsetzt. Eine genaue Temperaturführung mit maximal ± 5°C Temperaturschwankungsbreite ist daher unerläßlich. Der Reaktor kann durch sogenanntes Anblasen mit reinem Sauerstoff beschleunigt angefahren werden, um die optimale Reaktionstemperatur so schnell wie möglich zu erreichen.

Es wurde überraschenderweise trotz des edleren Charakters von Bismut im Rahmen dieser Erfindung gefunden, daß für die Oxidation von Bismut-Legierungen ein Barton-Reaktor vorteilhaft ist.

Für die Herstellung von hochreinem Bismutoxid durch Oxidation von reinem Bismut-Metall hat sich erwiesen, daß der Barton-Reaktor weniger geeignet ist, weil sich der entstehende Oxidstaub als Produkt nicht pneumatisch aus dem Reaktor austragen läßt. Als besser geeignet hat sich dagegen beispielsweise der vorgenannte "Heubach-Doppelreaktor" mit einer Entleerung über ein mechanisches Bodenventil mittels Schwerkraft in eine mechanische Fördervorrichtung erwiesen.

Bei der Herstellung von hochreinem Bismutoxid, d.h. einem Bismutoxid mit einem Gehalt an Dibismuttrioxid (Bi₂O₃) von mehr als 99 Gew.%, insbesondere mehr als 99,5 Gew.% und vornehmlich mehr als 99,95 Gew.%, solite von einem Bismut-Metall ausgegangen werden, dessen Reinheitsgrad dem des gewünschten Bismutoxids entspricht.

Für die Herstellung von hochreinem Bismutoxid ist eine Temperatur im Reaktor von mindestens 600°C erforderlich, die vorzugsweise schnell erreicht werden sollte, z.B. durch Anblasen mit reinem Sauerstoff. Zur primären Erhöhung des Oxidationsgrades auf über 99 Gew.% kann die Temperatur auf bis zu 700°C erhöht werden, liegt jedoch vorzugsweise zwischen 650 und 690°C und am meisten bevorzugt bei etwa 670°C. Wegen der im Doppelreaktor auftretenden, höheren Temperaturen und der damit einhergehenden Gefahr der Verklumpung infolge der Bildung eutektischer Oxidschmelzen sind größere Mengen an Blei- oder Zinn-Verunreinigungen im Ausgangs-Bismut-Metall zu vermeiden.

Die Grobheit des erhaltenen Oxids erfordert eine bei steilem Anstieg des Rührwerks-Motorstroms beginnende, gegenüber beispielsweise einer Bleioxidation früher einsetzende und beschleunigte Austragung des Primäroxids zur Rückführung, um einer "Versandung" des Reaktors entgegenzuwirken.

Mit Hilfe des erfindungsgemäßen Verfahrens war es somit erstmals möglich, in industriellem Maßstab technisches Bismutoxid oder Bismutlegierungsoxide mit einem Bi₂O₃-Gehalt von über 99,5 Gew.% bei reinem Bi₂O₃ und von über 90 Gew.% bei Bismutlegierungsoxiden herzustellen.

Besonders vorteilhaft hat sich bei dem erfindungsgemäßen Verfahren erwiesen, daß gegenüber der Kalzinierung von Bismutsalzen hier keine umweltgefährdenden Gase entstehen, die durch Rauchgaswäsche etc. abgetrennt werden müssen. Weiterhin ist bei dem erfindungsgemäßen Verfahren vorteilhaft, daß keine Carbonatzwischenstufen hergestellt werden müssen.

Die Erfindung betrifft auch Vorrichtungen zur Durchführung der Verfahren mit einem mit einem Rührer versehenen Reaktor, der eine mit einer Drossel versehene Luftzufuhrleitung sowie eine Einrichtung zum Zudosieren von flüssigem Bismut bzw. flüssiger Bismutlegierung aufweist, ferner eine Austragsvorrichtung für das Bismutoxid bzw. das Bismutmischoxid, insbesondere Bismutblei- oder Bismut-Blei-Zinnoxid sowie einem Schmelzkessel für das flüssige Metall.

Die erfindungsgemäße Vorrichtung zur Durchführung des oben beschriebenen Verfahrens enthält einen mit einem Rührer 6, 215 versehenen Reaktor 4, 210, der eine mit einer Drossel 216 versehene Luftzufuhrleitung 16, 214 sowie eine Einrichtung 3 zum Zudosieren von flüssigem Bismut-haltigem Edukt aufweist, ferner mit einem Abzug 8, 217 für das Produkt sowie einem Schmelzkessel 2, 24 für das flüssige Edukt versehen ist, wobei die Einrichtung 3 zum Zudosieren des flüssigen Edukts aus einem Vorratsbehälter 21 besteht, der oberhalb des Reaktors 4, 210 angeordnet ist und dessen Boden konisch geformt in ein auswechselbares, sich in den Raum des Reaktors 4, 212 erstreckendes Düsenrohr 211 übergeht, und daß dieser Vorratsbehälter 21 durch eine Zuführungsleitung und einen Überlauf mit dem Schmelzkessel 2, 24 verbunden ist.

An der Düse 22 des Düsenrohres 211 ist eine Reinigungsnadel 26 angebracht, die mit einer Steuereinrichtung 213 zum zeitweiligen Durchstoßen der Düse 22 versehen ist, wodurch einerseits eine Reinigungswirkung, andererseits eine Absperrfunktion erfüllt wird.

Die Wände des Schmelzkessels 24, des Dosierkessels 21 und des Reaktors 210 sind nach oben divergent konisch ausgeführt, um beim Erstarren der Schmelze Schäden an den Gefäßen zu verhindern.

Die erfindungsgemäßen Vorrichtungen und die Verfahrensführung sind schematisch in den Figuren 1 bis 4 dargestellt.

Es zeigen:
- Figur 1: eine schematische Schnittansicht einer Vorrichtung zur Durchführung der Oxidation von Bismut-Legierungen in z.B. einem Barton-Reaktor,
- Figur 2: eine schematische Draufsicht auf die in Figur 1 dargestellte Vorrichtung,
- Figur 3: eine schematische Darstellung einer Vorrichtung zur Herstellung von hochreinem Bismutoxid in z.B. einem Doppelreaktor, und
- Figur 4: die schematische Darstellung der Verfahrensführung in einer Vorrichtung gemäß Fig. 3.

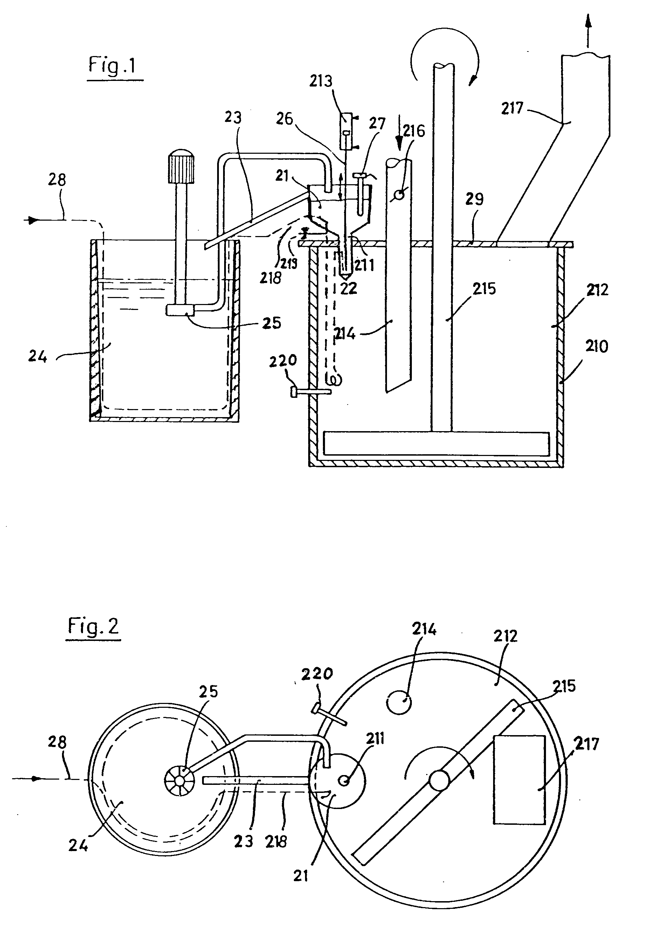

Wie vorstehend erwähnt, wird die Oxidation von Bismut-Legierungen vorzugsweise in einem Barton-Reaktor durchgeführt, der schematisch in den nachfolgend erläuterten Figuren 1 und 2 dargestellt ist.

Diese Vorrichtung ist dadurch gekennzeichnet, daß die Einrichtung zum Zudosieren der flüssigen Bismutlegierung aus einem Vorratsbehälter 21 besteht, der oberhalb des Reaktors 210 angeordnet ist und dessen Boden konisch geformt in ein auswechselbares, sich in den Raum des Reaktors 210 erstreckendes Düsenrohr 211 übergeht, und daß dieser Vorratsbehälter 21 durch eine Zuführungsleitung, beispielsweise einer Tauchpumpe 25, und einen Überlauf 23 mit dem Schmelzkessel 24 verbunden ist.

Vorzugsweise ist an der Düse 22 des Düsenrohrs 211 eine Reinigungsnadel 26 angebracht, die mit einer Steuereinrichtung und Antrieb 213 zum zeitweiligen Durchstoßen der Düse 22 versehen ist, wodurch einerseits eine Reinigungswirkung, andererseits eine Absperrfunktion erfüllt wird.

Im Oxidationsreaktor sollte ein intensiv arbeitendes und in der Geschwindigkeit regelbares Rührwerk geeigneter Geometrie vorhanden sein, durch das der Inhalt und das Produkt in fließbettähnlicher Schwebe gehalten werden.

Das Fertigprodukt wird in gesteuerten Zyklen und Anteilen der Gesamtfüllung über die Leitung 217 in an sich bekannter Weise aus dem Reaktor ausgeführt.

Da sich bei der Verarbeitung von Bismut-Legierungen Oxid-Eutektika bilden, die häufig klumpen, muß dann entweder eine höhere Rührgeschwindigkeit und das oxidationsbeschleunigende zusätzliche Einblasen von Wasserdampf erfolgen und/oder auch höhere Sauerstoffmengen mit entweder der heißen Sprühdruckluft oder der Reaktions- und/oder Förderluft zugeführt werden.

Für die Steuerung der Reaktion im Barton-Reaktor sind folgende Systeme für die zweistufige Herstellung von Bleioxid bekannt.
1.
   a) Konstanthaltung der Luftmenge, die durch den Reaktor gesaugt wird,
   b) Zuführung des flüssigen Bleis portionsweise in Abhängigkeit von der Temperatur im Reaktor,
2.
   a) im zeitlichen Durchschnitt gleichmäßige Bleizufuhr,
   b) Steuerung der Luft in Abhängigkeit von der Temperatur im Reaktor.

In beiden Fällen kann erreicht werden, daß der Prozeß automatisch abläuft, und ein im Durchschnitt gleichmäßiges Produkt erzeugt wird, dessen Gleichmäßigkeit aber nur scheinbar ist, wie die Ergebnisse mehrerer, während eines Regelkreislaufes entnommener und analysierter Momentanproben zeigen. Je nach Schwankungsbreite der Reaktortemperatur findet man dann Abweichungen vom mittleren Oxidationsgrad, die viele Prozenteinheiten ausmachen können, was bei den angewandten zweistufigen Verfahren nicht schädlich ist, weil nachoxidiert wird.

Solche Abweichungen sind aber unzulässig, wenn ein praktisch vollkommen oxidiertes Produkt (Herstellung von hochreinem Bismutoxid) oder ein Mischoxid mit einem Oxidationsgrad von mehr als 90 Gew.% (Oxidation von Bismut-Legierungen) erzeugt werden soll, da es hierbei nicht genügt, daß während eines Teilabschnittes im Regelzyklus vielleicht ein volloxidiertes Oxid anfällt, während danach aber wieder für einige Zeit unzureichend oxidiertes Produkt entsteht, und auch der Durchschnittswert unzureichend ist.

Für Bleioxid zeigt die DE-30 16 984 C2 ein einstufiges Verfahren zur Herstellung von hochreinem PbO und die DE-38 29 534 C2 zeigt ein teilkontinuierliches Verfahren zur Herstellung von hochreiner Bleiglätte mit mehr als 99,99 Gew.-% Oxidgehalt.

Wegen des schon oben beschriebenen, gegenüber Blei edleren Charakters von Bismut, wegen der Aggressivität von Bismutoxid und wegen des Auftretens von Oxideutektika sind jedoch die Verhältnisse zwischen Blei und Bismut nicht vergleichbar und können daher nicht von Blei auf Bismut übertragen werden.

Es war daher umso überraschender, daß Abänderungen und Verbesserungen der Verfahren der DE-30 16 984 A1 und DE-38 29 534 A1 die Übertragung derartiger Verfahren auf Bismut und Bismutlegierungen gestatten. Hinzu kommt, daß auch überraschenderweise festgestellt wurde, daß eine Reihe von unterstützenden Maßnahmen auch in der neuen Kombination mit dem Barton-ähnlichen Ofen positive Effekte aufwies. Dies ohne Schaden für Reaktor oder Reaktionsbilanz zu erwarten, war jedoch auch Fachleuten aus ihrem Praxiswissen her nicht möglich.

Über dem Deckel 29 eines Barton-Reaktors 210 ist dicht am Rand ein Vorratsbehälter 21 für flüssiges Bismut angeordnet, der im Boden ein Düsenrohr 211 aufweist, welcher durch eine Bohrung im Reaktordeckel 29 bis in den Reaktionsraum 212 reicht. In diesem Düsenrohr 211 ist eine Düse 22 auswechselbar eingesetzt, die eine genau kalibrierte Bohrung für den Bismutausfluß besitzt. Der Vorratsbehälter 21 hat außer dem erwähnten Bismutauslauf noch einen Bismutüberlauf 23, der in einen Schmelzkessel 24 zurückführt. Eine Tauchpumpe 25 in diesem Schmelzkessel 24 pumpt ständig einen Überschuß an Bismut in den Vorratsbehälter 21, so daß dieser stets auf ein konstantes Niveau gefüllt bleibt und sich über der Düse 22 der hydrostatische Druck des Bismuts nicht verändert.

Die erfindungsgemäße Vorrichtung geht somit von einem Stand der Technik aus, wonach ein mit einem Rührer versehener Reaktor vorgesehen ist, der eine mit einer Drossel versehene Luftzufuhrleitung sowie eine Einrichtung zum Zudosieren von flüssigem Bismut bzw. flüssiger Bismut-Legierung und eine Austragsvorrichtung für das Bismutoxid bzw. Bismutmischoxid aufweist, wobei ferner ein Schmelzkessel für das flüssige Bismut bzw. die Bismut-Legierung vorliegt, und sie ist dadurch gekennzeichnet, daß die Einrichtung zum Zudosieren des flüssigen Bismuts bzw. der flüssigen Bismut-Legierung aus einem Vorratsbehälter 21 besteht, der oberhalb des Reaktors 210 angeordnet ist und eine auswechselbare, sich in den Raum des Reaktors 212 erstreckende Düse 22 besitzt, und daß dieser Vorratsbehälter mit dem Schmelzkessel 24 verbunden ist.

Damit die Düse 22 mit der Zeit nicht durch Oxide verstopft wird, kann sie in geregelten Zeitabständen durch eine Reinigungsnadel 26 gleichen Durchmessers automatisch durchstoßen und gereinigt werden. Diese Reinigungsnadel 26 kann von einem Arbeitszylinder der Steuereinrichtung 213 in gesteuerter Weise betätigt werden. Mit dieser Vorrichtung wird sowohl eine vollkommen gleichmäßige Bismutdosierung erreicht, als auch vermieden, daß das Bismut bzw. die Bismutlegierung zusammen mit kühlender Luft in den Reaktor 210 eintritt.

Gemäß einer vorteilhaften Ausführungsform der Erfindung ist somit an der Düse 22 eine Reinigungsnadel 26 angebracht, die mit einer Steuereinrichtung 213 zum zeitweiligen Durchstossen der Düse 22 versehen ist.

Das Versprühen des Bismuts bzw. der Bismut-Legierung mit erhitzter Preßluft kann so ausgeführt werden, daß die in das Düsenrohr 211 eingesetzte Düse 22 als Sprühdüse von an sich bekannter Bauart ausgebildet ist und Preßluft durch im Schmelzkessel und den nicht vom Rohrer bestrichenen Reaktorraum angeordnete Rohrspiralen geleitet, erhitzt und dann in die Düse, wie bei 218 schematisch gezeigt, geleitet wird.

Die Temperatur des eingedüsten Bismuts bzw. der Bismut-Legierung kann mit einem Thermoelement 27 genau überwacht und geregelt werden. Ferner kann die Innentemperatur des Reaktors 210 mit einem Thermoelement 220 überwacht und geregelt werden. Die Luftzuführung erfolgt über die Leitung 214 mit der Drossel 216, und ein Rührer 215 verrührt das flüssige Bismut bzw. die flüssige Bismut-Legierung. Ein Abzug des Bismutmischoxids erfolgt über die Leitung 217 in an sich bekannter Weise.

Der Oxidationsgrad aller in der Legierung enthaltenen Metalle liegt im erhaltenen Bismutlegierungsoxid zwischen 85 und 95 Gew. %; hauptsächlich wird ein Oxidationsgrad von 90 Gew.% (entsprechend ca. 10 Gew.% Restmetallanteil) gefunden. Infolge des edleren Charakters von Bismut ist dessen Gehalt im metallischen Restanteil angereichert.

Der Materialdurchsatz liegt ähnlich dem bei reinem Bleibetrieb bei etwa 500 kg/h für einen 1,4 m im Durchmesser messenden Reaktor, was für die generelle Auslegung lediglich exemplarisch, nicht jedoch als die Anwendbarkeit des hier gefundenen Verfahrens irgendwie einschränkend, zu verstehen ist.

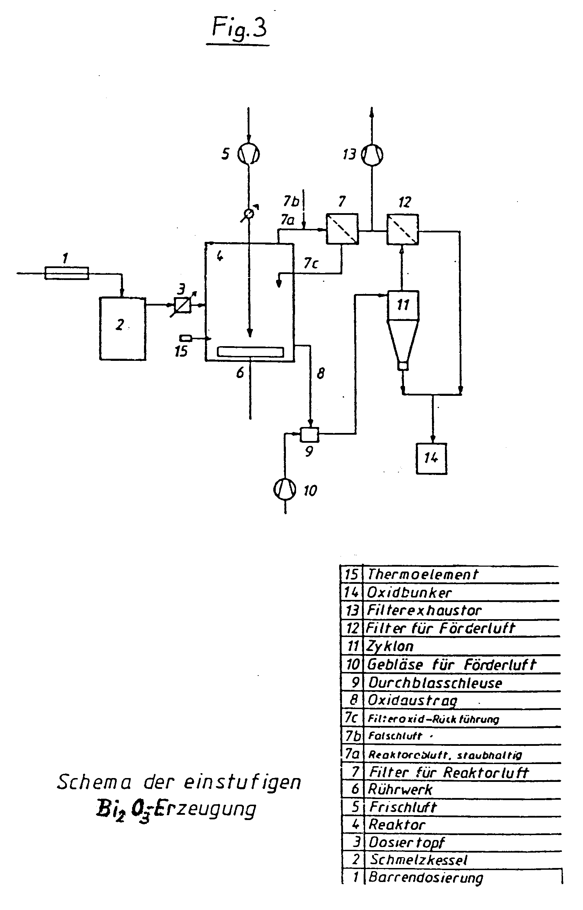

Die weitere Aufgabe der Herstellung von Bismutoxid mit einem Bi₂O₃-Gehalt von mehr als 99,95 Gew. % wird erfindungsgemäß dadurch gelöst, daß vorzugsweise in einem Doppelreaktor (schematische Darstellung in Fig. 3) in der vorgenannten Weise zu Anfang ein Rohoxid mit einem Oxidationsgrad von ca. 99,5% erzeugt wird, und das ausgetragene Produkt abgeschieden und in den Reaktorraum zurückgeführt wird, wobei, wenn sich im Reaktor genug Oxid angesammelt hat, die Zufuhr von Bismut und die Filteroxidrückführung unterbrochen werden und nur noch Luft eingeblasen wird und die auf einen Restgehalt an metallischem Bismut von höchstens 0,02 %, vorzugsweise 0,01 % oxidierte Füllung nicht vollständig, sondern nur bis zu etwa 50 % ausgetragen wird.

Zweckmäßig werden für den ersten Teil eines Arbeitszyklus zur Herstellung des Rohoxids etwa 70 % der Gesamtzeit und für die Fertigoxidation einschließlich der Entleerung etwa 30 % der Gesamtzeit benutzt.

Das Fertigprodukt wird in gesteuerten Zyklen und Anteilen der Gesamtfüllung am Boden des Reaktors ausgeschleust.

Die Verfahrensstufen Voroxidation und Fertigungsoxidation wurden im Laufe der Entwicklung verschiedentlich verbessert und auch die für die Voroxidation benutzte, als Barton-Reaktor bekannte Vorrichtung wurde verschiedentlich verbessert, um Leistungen und Aktivität zu erhöhen, jedoch wurde ein Oxidationsgrad von 99,0 % im erzeugten Produkt praktisch nie überschritten. Ein Produkt mit 1 % metallischem Bismut ist aber in den wichtigsten der oben genannten Verwendungsgebiete nicht akzeptabel.

Die Lösung der weiteren Aufgabe der Erfindung, hochreines Dibismuttrioxid herzustellen, führt in der Praxis mit dem erfindungsgemäßen Verfahren und der erfindungsgemäßen Vorrichtung zur einstufigen Herstellung von Bismutoxid mit einem Reinheitsgrad von z.B. 99,7 bis 99,8 % und mit einer hohen technischen Anforderungen genügenden Korngröße.

Es kann also im Reaktionsprodukt ein Gehalt an metallischem Bismut von deutlich unter 1 % erreicht werden.

Beim erfindungsgemäßen Verfahren tritt das Bismut mit einer Temperatur in den Reaktor ein, die nicht wesentlich unter der der Prozeßtemperatur liegt.

Die Viskosität flüssigen Bismuts nimmt mit der Temperatur stark ab, so daß das zugeführte Bismut um so schneller und vollständiger durch das Rührwerk im Reaktor zerteilt und oxidiert wird, je heißer es ist. Hierbei ist aber auch zu berücksichtigen, daß Bismut unter allen Metallen, mit Ausnahme des flüssigen Quecksilbers, die niedrigste Wärmeleitfähigkeit aufweist. Eine Zuführung des Bismuts durch eine Einlaßöffnung im Reaktor, die auch kalte Luft mit einströmen läßt und wie sie in herkömmlichen Ausführungsweisen üblich ist, kann daher nicht zugelassen werden. Das Metall muß vielmehr für sich und mit möglichst hoher Temperatur eingedüst werden, wobei ein Versprühen mit erhitzter Preßluft besonders vorteilhaft ist. Wegen der Volumenkontraktion des flüssigen Bismuts und der Tendenz zum Zusammenlaufen der Metalltröpfchen ist hier also von vorneherein auf eine dauerhafte Zerkleinerung und Verteilung des Bismuts zu achten.

Sind alle den Oxidationsprozeß bestimmenden Größen, also Bismutdosierung und -temperatur, Luftdosierung und Prozeßtemperatur einmal aufeinander abgestimmt, so läuft die Reaktion vollkommen gleichmäßig und bedarf im Prinzip keiner weiteren Steuerung als der der Kompensation kleiner Schwankungen, die sich bei einzelnen Einflußgrößen rein zufällig ergeben können. Eine solche Kompensation wird durch minimale Veränderung des Reaktions-, Dosier- und Falschluft-Durchsatzes vorgenommen, wobei die steuernde Größe immer die Reaktortemperatur ist. Dieselbe darf nicht mehr als ± 5 °C, vorzugsweise ± 2 °C schwanken, was sich bei Einhaltung der obigen Bedingungen gut erreichen läßt, und sie wird vorzugsweise auf 670 °C eingestellt. Niedrigere Solltemperaturen führen zu unvollständiger Reaktion, höhere zu Schwierigkeiten durch Sinterung und Klumpen des Produkts.

In einfachster Weise wird die Bismutdosierung dadurch konstant gehalten, daß das flüssige Bismut aus einem Gefäß in den Reaktor über eine Düse ein-geführt wird, in welcher der Bismutpegel konstant gehalten wird. Auf diese Weise ist oberhalb der Düse immer ein konstanter hydrostatischer Druck vorhanden, so daß die Zuführungsbedingungen des Bismuts konstant sind.

Zur Durchführung des Verfahrens wird mit Vorteil ein Vorratsbehälter über dem Reaktor angeordnet, aus dem sich eine auswechselbare Düse in den Reaktionsraum erstreckt, und dieser Vorratsbehälter ist über eine Speiseleitung und einen Überlauf mit einem Schmelzbehälter verbunden. Speiseleitung und Überlauf sorgen in einfachster Weise bei dieser Ausführungsform für einen konstanten Pegel und damit einen konstanten Druck.

Um eine Verstopfung der Düse zu vermeiden, kann mit Vorteil an der Düse eine steuerbare Reinigungsnadel angeordnet sein, mit der von Zeit zu Zeit die Düse gereinigt wird.

Es kann aber auch vorteilhaft sein, daß die Düse eine an sich bekannte Sprühdüse ist, der erhitzte Preßluft über eine durch den Schmelzkessel und den Reaktor selbst verlaufende Leitung zugeführt wird.

Im einzelnen wird folgendermaßen gearbeitet, wobei hier auch die erste Stufe der Herstellung von technischem Bismutoxid mit einbezogen ist:
1. In den auf Reaktionstemperatur sich befindlichen Reaktor wird flüssiges Bismut dosiert.
2. Die gleichzeitig eingeblasene Oxidationsluft wird abgezogen, filtriert, und das mitgerissene, ausgefilterte Oxid in den Reaktor zurückgeführt.
3. Wenn ein bestimmter Füllgrad des Reaktorgefäßes erreicht ist, wird sowohl die Bismutoxidierung als auch die erwähnte Rückführung des Filteroxids unterbrochen und die Fertigoxidation beginnt.
4. Nach erfolgter Fertigoxidation wird das Produkt vom Boden des Reaktors über ein geeignetes Austragsaggregat abgezogen, wobei jedoch eine bestimmte Restmenge im Reaktor verbleiben muß, damit der Zyklus wieder von vorne beginnen kann.

Damit ist das bisher bekannte Verfahren der einstufigen Oxidation vor allem in zwei Punkten verändert:
- das ausgetragene sowie das mit Luft mitgerissene Oxid wird zurückgeführt; und
- das Fertigprodukt wird nicht ganz, sondern nur etwa zur Hälfte ausgetragen, und dies erfolgt mechanisch und nicht pneumatisch (d.h. nach unten und nicht nach oben).

Vorzugsweise erfolgt auch das Rühren von unten, da sich hierbei ein ziemlich schnell laufender Rührer mit angeschrägten Rührerflügeln bautechnisch leich-ter einsetzen läßt, der eine stärkere Durchmischung und somit eine bessere Verteilung von Sauerstoff in der Schüttung bewirkt.

Im übrigen können alle Prozeßparameter in der bisher üblichen Weise geregelt werden. Besonders wichtig ist die Reaktionstemperatur, für deren Steuerung außer der sonst gebräuchlichen Veränderung der Bismut- oder Luftdosierung auch das direkte Einspritzen von Wasser vorteilhaft ist, wenn man etwas kühlen will. Allerdings ist hierbei auf eine verzögert einsetzende, mögliche Beschleunigung der Reaktion durch geringe Mengen Wassers zu achten. Insgesamt muß der Prozeßschritt der Voroxidation allerdings so geführt werden, daß bereits ein Oxidationsgrad von weit über 99 % erreicht wird, vorzugsweise 99,7 bis 99,8 %, da sich andernfalls der zweite Teilschritt nicht so erfolgreich ausführen läßt.

Auf diese Weise wird es möglich, den einstufig erzielbaren Bi₂O₃-Gehalt von 99,7 bis 99,8 nochmals wesentlich zu steigern, nämlich auf mindestens 99,99, indem zwar scheinbar wieder zweistufig gearbeitet wird, jedoch kann der Gesamtprozeß in der geschilderten Weise erfolgreich in kurzer Zeit deswegen durchgeführt werden, weil die sich sonst beim zweistufigen Prozeß über Stunden erstreckende Fertigoxidation in wenigen Minuten erfolgt, so daß auch keine thermische Fremdenergie zugeführt werden muß, insbesondere, wenn der Reaktor gut isoliert ist. Die Durchsatzleistung eines Reaktors, der statt eines Rohoxids ein Fertigoxid erzeugt, ist zwar etwas geringer, jedoch steht dieser geringfügige Nachteil in keinem Verhältnis zu dem Aufwand, der sonst für eine echte zweite nachgeschaltete Prozeßstufe gemacht werden müßte.

Für die Herstellung von Bi₂O₃ ergibt sich bei Anwendung obiger Prinzipien das überraschende Resultat, daß das Fertigbrennen in einem Reaktor üblicher Größe in ca. 4 Minuten möglich ist. Auf dieser Erkenntnis aufbauend, wurde ein einstufiger Bi₂O₃-Prozeß entwickelt, der das gleiche Aggregat zum Fertigbrennen wie zur Voroxidation benutzt. In dem Reaktor wird zunächst ein Rohoxid mit einem Oxidationsgrad von ca. 99,7 % erzeugt. Das mit der Reaktionsluft sowie über die Austragsvorrichtung ausgetragene Produkt wird abgeschieden und in den Reaktor zurückgeführt. Sobald sich im Reaktor genügend Rohoxid angesammelt hat, werden die Bismutzufuhr und Filteroxidrückführung unterbrochen und wird nur noch Luft eingeblasen; innerhalb von wenigen Minuten ist dann die Füllung bis auf einen Restgehalt an metallischem Bismut von 0,01 % oxidiert. Die Temperatur sinkt dabei nur wenig und in durchaus zulässigem Maße ab. Das Fertigprodukt wird anschließend über eine Austragsschleuse am Boden des Reaktors teilweise ausgetragen; ein Rest verbleibt im Reaktor, da nur so der nächste Zyklus zur Erzeugung von Rohoxid wieder einwandfrei gestartet werden kann. Als Rest, der im Reaktor verbleiben kann, wird zweckmäßig etwa die Hälfte im Reaktor belassen, jedoch kann diese Menge auch etwas höher sein. Der Ausdruck "genügend Rohoxid", das sich im Reaktor angesammelt hat, bedeutet eine solche Menge, wie sie der Rührer noch gut bewegen kann, was natürlich von der Art des Rührers und der Reaktorform abhängt. Der Temperaturabfall bei der Fertigoxidation beträgt im Durchschnitt weniger als 50 °C, bei guter Verfahrensführung auch nur ca. 20 °C.

Ein gesamter Zyklus beansprucht etwa 70 % der Zeit zur Herstellung von Rohoxid und 30 % für die Fertigoxidation einschließlich der Entleerung. Bei einer Fertigbrennzeit von ca. 4 min bedeutet dies eine Gesamtzeit von ca. 15 min bis 20 min (wenn man zur Fertigbrennzeit von 4 min noch eine 1 - bis 2-minütige Entleerzeit zählt.)

Im folgenden soll die Arbeitsweise zur Herstellung von hochreinem Bismutoxid unter Verweisung auf die schematische Darstellung eines Doppelreaktors in Fig. 3 erläutert werden:

In dem Rührwerksreaktor 4 mit dem Rührwerksantrieb 6 erfolgt über den Dosiertopf 3 die Bismutzuführung, wobei dieser Zulauf auch eine Düse sein kann, die gemäß EP-A-00 49 478 bzw. DE-AS-30 16 984 arbeitet. Über die Leitung 5 erfolgt die Zufuhr der Primärluft und über die Leitung 7a, das Filter 7 und den Filterexhaustor 13 erfolgt der Abzug der Luft, wobei über eine in 7a mündende Leitung 7b Falschluft zutreten kann und über Filter 7 das mit der Abluft abgehende Oxid zurückgehalten wird, das über die Leitung 7c in den Reaktor zurückgeführt wird. Über die Leitung 5 kann auch Sauerstoff zugeführt werden, was bei der Nachoxidation die Luftzufuhr ergänzen oder ersetzen kann. Über 8 und vorzugsweise 11 wird das Fertigprodukt ausgetragen, wenn es den hinreichenden Oxidationsgrad erzielt hat. Es wird also bei 8 das Fertigoxid mechanisch abgezogen und dieses dann entweder direkt aus-getragen oder vorzugsweise über die Durchblasschleuse 9 in den Zyklon 11 geblasen, wo gewünschtenfalls Grobanteile, z.B. Teilchen über 200 µm abgetrennt werden können. Dieses Abtrennen kann natürlich auch beim weiteren Transport aus dem Oxidbunker 14 erfolgen. In 4 wird über ein Thermoelement 15 die Reaktionstemperatur gemessen und gesteuert. Diese Steuerung wird in Kombination mit der Analyse des Reaktionsprodukts natürlich auch für das Zudosieren von Bismut, Primärluft, Sauerstoff und Wasser benutzt und steuert auch, vorzugsweise über die Stromaufnahme des Rührwerksantriebs 2 den Austrag des Reaktionsprodukts.

Wie erwähnt, wird das Reaktionsprodukt nicht vollständig ausgetragen, sondern nur höchstens zur Hälfte, um die Fertigoxidation der nächsten Charge zu erleichtern. Diese im Reaktor verbleibende Restfüllung kann bis zu ²/₃ be-tragen. Der Ausdruck "Hälfte'' bzw. "²/₃" bezieht sich, wie auf diesem Fachgebiet üblich, immer auf die Rührwerkkapazität und nicht auf das Reaktorvolumen.

Die folgenden Arbeitsbeispiele zeigen den Prozeß der Bi₂O₃-Herstellung im einzelnen:

### Beispiel 1

In einem Reaktor mit 1.400 mm ⌀ wurde eine Bismutmenge von konstant 500 kg/h mit 650°C eingedüst, wobei die Reaktionstemperatur auf 670°C eingestellt war, die Drehzahl des Rührwerks betrug 200 UpM. Das in einem Zyklon und nachgeschaltetem Filter abgeschiedene Oxid hatte während einer Produktionsperiode von drei Wochen einen maximalen Bi₂O₃-Gehalt von 99,88 %, während die minimale Analyse 99,75 % ergab; der Durchschnitt lag bei 99,80 %. Als Siebrückstand über 60 µm wurde ein Anteil von ca. 1% gefunden.

Die Nachoxidation erfolgt erfindungsgemäß wie schon angegeben dadurch, daß man die Oxidierung des metallischen Bismuts so abwandelt, daß unter Verwendung eines bekannten Rührwerksreaktors, z.B. des Typs "Heubach-Doppelreaktor", der Prozeß in Zyklen geführt wird. Es werden also verschiedene Parameter bewußt nicht konstant gehalten, sondern abweichend von bekannten Verfahren nach dem jeweils gewünschten und erforderlichen Schema in sich ständig wiederholenden Zyklen variiert.

Die Produktionsleistung betrug etwa 500 kg/h für den verwendeten Reaktor.

### Beispiel 2

In einen runden Reaktor mit z.B. 800 mm Durchmesser, der zu 65 % der Rührwerkkapazität mit Bismutoxid gefüllt und der auf 615°C aufgeheizt ist, wird gleichmäßig Bismut und Luft eindosiert - z.B. 200 kg Bi/h und 150 m³ Luft/h. Im Laufe von etwa 25 min füllt sich der Reaktor soweit, daß die Kapazität des Rührwerks ausgeschöpft ist, die Temperatur steigt auf 670 °C. An dieser Stelle wird die Bismutzufuhr und die Rückführung des Filteroxids unterbrochen und die Fertigoxidation beginnt. Für die Dauer von 3 bis 4 min wird der Reaktorgehalt nur unter Zufuhr von Luft durchgerührt, anschließend eine Menge von ca. 70 kg aus dem Reaktor über ein spezielles Austragsaggregat ausgefahren, was weiterhin ca. 2 min in Anspruch nimmt. Die Temperatur sinkt während der Fertigoxidation und des Austragens um etwa 50 bis 60°C; nach Abschluß des gesamten Prozeßschritts ist der Anfangszustand wieder erreicht und der nächste Zyklus beginnt, indem die Bismutdosierung wieder eingeschaltet wird und auch das Filteroxid wieder zuläuft.

Der Temperaturabfall kann durch gute Isolation des Reaktors verringert werden, jedoch kann ein Temperaturabfall bis zu 60 °C zugelassen werden.

Prozentual nimmt die Voroxidation ca. 70 % der Gesamtzeit in Anspruch, so daß das Ausbringen dieses kleinen Reaktors rund 175 kg Bismutoxid je Stunde beträgt. Das erzeugte Oxid weist einen Restanteil an freiem Bismut von weit unter 0,01 % auf. Damit entspricht es allen Spezifikationen für handelsübliches Bismutoxid für die eingangs genannten Anwendungen.

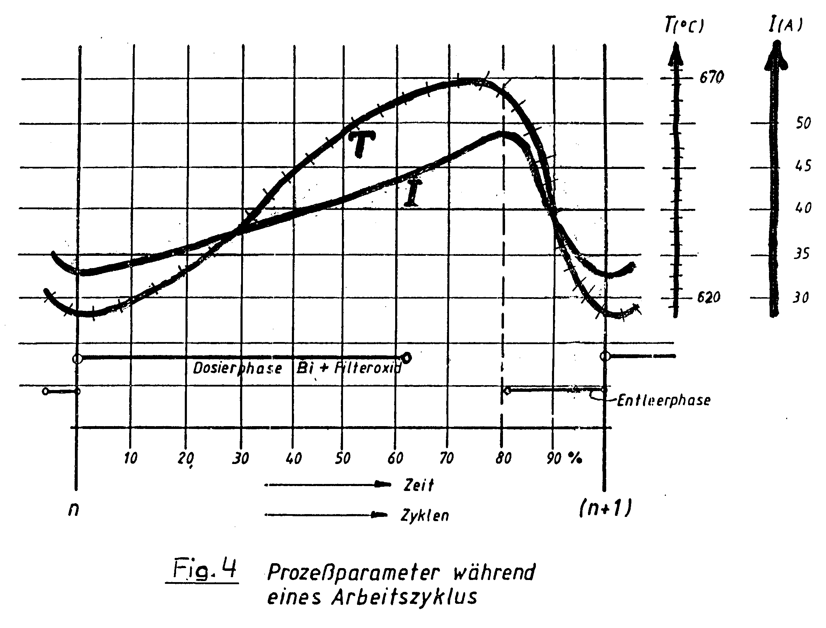

Das Diagramm auf der Abb. 4 veranschaulicht im Detail einen Arbeitszyklus.

Das Diagramm von Abb. 4 zeigt Temperaturverlauf und Stromaufnahme im Bi₂O₃-Reaktor während eines Arbeitszyklus. Die mit *T* bezeichnete Kurve zeigt im ansteigenden Teil die Temperaturerhöhung während der Dosierphase, also während der Phase, in welcher Bismut in den Reaktor eindosiert und zu Bismutoxid oxidiert wird. Im absteigenden Teil zeigt diese Kurve die Phase der Fertigoxidation und der Entleerung, wobei diese Phasen in Prozent der Gesamtzeit eines Arbeitszyklus angegeben sind, da die Absolutzeit ja von mehreren Faktoren abhängt, vor allem aber von der Reaktorgröße.

Die Kurve *I* zeigt die Stromaufnahme in Ampere, die der Antriebsmotor des Reaktorrührers während eines Arbeitszyklus aufnimmt. Man sieht, daß diese Größe, die der Rührwerksenergie proportional ist, für die Fertigoxidation erst stark ansteigt und in der Entleerungsphase natürlich schnell abnimmt, da hier der Rührer entlastet wird. An der linken Ordinate, die mit *n* bezeichnet ist, ist links noch die Entleerungsphase des vorhergehenden Zyklus angegeben, während an der rechten, mit *n* + 1 bezeichneten Ordinate die nächste Dosierphase angesetzt ist. Das gleiche gilt für den Temperaturverlauf und Energieverlauf der Kurven *T* und *I*.

Dieses Arbeiten in Zyklen gestattet somit die praktisch einstufige Erzeugung von Bismutoxid mit mehr als 99,99 % Reinheit, was bisher nur zweistufig durch Rohoxidation und getrennt davon erfolgende Nachoxidation möglich war.

Wie schon erwähnt, kann beim Einsatz von Bismutlegierungen Klumpung durch Bildung von Oxid-Eutektika eintreten. Diese Klumpung kann eventuell durch höhere Rührgeschwindigkeit und das oxidationsbeschleunigendezusätzliche Einblasen von Wasserdampf und/oder auch höheren Sauerstoffmengen mit entweder der heißen Sprühdruckluft oder der Reaktions- und Förderluft behoben oder jedenfalls zurückgedrängt werden. Zu vermeiden ist die Dosierung von Legierungen, deren entsprechende oder bei geringfügig erhöhtem PbO-Anteil entsprechende Oxidzusammensetzung nahe einem eutektischen Gemisch liegt, so daß die Anteile sich bildender Schmelzen gering bleiben.

## Patentansprüche

1. Verfahren zur Herstellung von technischem Bismutoxid oder Bismutlegierungsoxiden mit einem Bi₂O₃-Gehalt von über 99,5 Gew.% bei reinem Bi₂O₃ und über 90 Gew. % bei Bismutlegierungsoxiden, jeweils bezogen auf eingesetztes Bismut, durch Oxidation von Bismut oder Bismutlegierungen in Rührwerksreaktoren, bei dem flüssiges Bismut oder eine flüssige Bismutlegierung kontinuierlich einem Reaktor zudosiert und in diesem unter Zufuhr von Luft gerührt und das entstandene Produkt abgezogen wird, dadurch gekennzeichnet, daß die Zudosierung des flüssigen Bismuts oder der Bismutlegierung konstant gehalten wird, wobei das Bismut oder die Bismutlegierung mit einer Temperatur T_{Bi} direkt in den Reaktor eingedüst wird, die zwischen der metallischen Schmelz- und der Reaktionstemperatur liegt, und der Luftstrom zur Einhaltung einer geeigneten Reaktionstemperatur bei einer Schwankung von nicht mehr als ± 5°C minimal verändert wird, wobei die Reaktionstemperatur dauernd und an jeder Stelle im Reaktor unter dem Schmelzpunkt des Oxids oder dem Eutektikum der Legierungsoxide liegt.

2. Verfahren nach Anspruch 1, dadurch gekennzeichnet, daß man zur Herstellung von hochreinem Bismutoxid Reaktionstemperaturen im Bereich von 480-700°C, insbesondere von 620-700°C auswählt.

3. Verfahren nach Anspruch 1, dadurch gekennzeichnet, daß man zur Herstellung von Bismutlegierungsoxiden Reaktionstemperaturen im Bereich von 450-580°C, insbesondere von 480-500°C, auswählt.

4. Verfahren zur Herstellung von hochreinem Bismutoxid nach einem der Ansprüche 1 und 2, wobei nach der Herstellung des Rohoxids aus reinem Bismut mit einem Oxidationsgrad von ca. 99,5 Gew.% zur Herstellung eines Bismutoxids mit einer Reinheit von mehr als 99,95 Gew.% durch Weiteroxidation das mit der Reaktionsrestluft oder der Austragsvorrichtung ausgetragene Produkt aus dieser abgeschieden und in den Reaktorraum zurückgeführt wird, und wobei, wenn sich im Reaktor genug Oxid angesammelt hat, die Zufuhr von Bismut und die Filteroxidrückführung unterbrochen werden und nur noch Luft eingeblasen und die auf einen Restgehalt an metallischem Bismut von höchstens 0,02%, vorzugsweise 0,01% oxidierte Füllung, nicht vollständig, sondern nur bis zu etwa 50% ausgetragen wird.

5. Verfahren nach Anspruch 1 und 3, dadurch gekennzeichnet, daß die Bismut-Legierung eine Bismut-Blei-Legierung oder eine Bismut-Blei-Zinn-Legierung mit einem Gehalt an Bismut zwischen 2 und 50 Gew. %, bevorzugt zwischen 3 und 30 Gew. % ist.

6. Verfahren nach einem der Ansprüche 1 bis 5, dadurch gekennzeichnet, daß für den ersten Teil eines Arbeitszyklus zur Herstellung des Rohoxids etwa 70% der Gesamtzeit und für die Fertigoxidation einschließlich der Entleerung etwa 30% der Gesamtzeit benutzt werden.

7. Verfahren nach einem der Ansprüche 1 bis 6, dadurch gekennzeichnet, daß ein im Oxidationsreaktor angebrachtes, intensiv arbeitendes Rühr- oder Mischwerk geeigneter Geometrie verwendet wird, durch das der Inhalt und das Produkt in fließbettähnlicher Schwebe gehalten werden.

8. Verfahren nach einem der Ansprüche 1 bis 7, dadurch gekennzeichnet, daß das Fertigprodukt in gesteuerten Zyklen und Anteilen der Gesamtfüllung kontinuierlich am Boden des Reaktors ausgeschleust wird.

9. Verfahren nach einem der Ansprüche 1 bis 7, dadurch gekennzeichnet, daß man das Fertigprodukt aus dein kontinuierlichen Prozeß abtrennt oder pneumatisch austrägt.

10. Technisches Bismutoxid oder Bismutlegierungsoxide, herstellbar nach dem Verfahren nach einem der Ansprüche 1 bis 9.

11. Vorrichtung zur Durchführung des Verfahrens nach einem der Ansprüche 1 bis 9, mit einem mit einem Rührer (6, 215) versehenen Reaktor (4, 210), der eine mit einer Drossel (216) versehene Luftzufuhrleitung (16, 214) sowie eine Einrichtung (3) zum Zudosieren von flüssigem Bismut-haltigem Edukt aufweist, ferner mit einem Abzug (8, 217) für das Produkt sowie einem Schmelzkessel (2, 24) für das flüssige Edukt versehen ist, dadurch gekennzeichnet, daß die Einrichtung (3) zum Zudosieren des flüssigen Edukts aus einem Vorratsbehälter (21) besteht, der oberhalb des Reaktors (4, 210) angeordnet ist und dessen Boden konisch geformt in ein auswechselbares, sich in den Raum des Reaktors (4, 212) erstreckendes Düsenrohr (211) übergeht, und daß dieser Vorratsbehälter (21) durch eine Zuführungsleitung und einen Überlauf mit dem Schmelzkessel (2, 24) verbunden ist.

12. Vorrichtung nach Anspruch 11, dadurch gekennzeichnet, daß an der Düse (22) des Düsenrohrs (211) eine Reinigungsnadel (26) angebracht ist, die mit einer Steuereinrichtung (213) zum zeitweiligen Durchstoßen der Düse (22) versehen ist, wodurch einerseits eine Reinigungswirkung, andererseits eine Absperrfunktion erfüllt wird.
